# EUROPEAN PATENT APPLICATION

(11) **EP 4 808 018 A1**
(43) Date of publication of application: **16.09.2026**
(21) Application number: 26153393.9
(22) Date of filing: 22.01.2026
(51) Int. Cl.: H04J 3/06

(54) **DYNAMIC MECHANISM ON TRANSPARENT CLOCKS TO FACILITATE EXCHANGE OF UNICAST MESSAGES**

(30) Priority: 13.03.2025 US 202519078653
(71) Applicant: Nokia Solutions and Networks Oy, 02610 Espoo (FI)
(72) Inventor: GOWTHAMAN, Vinoth, Kanata K2K 0H2 (CA); ROBERTS, Peter, Ottawa K2K 2T6 (CA); DONTHI, Shiva Sri Krishna, Ontario K2S 2X4 (CA); CLIFFORD, Ross, Kanata K2T 1A7 (CA)
(74) Representative: Bryers Intellectual Property Ltd

(57) **Abstract**

In a (e.g., ethernet-based PTP) time-distribution system, time receivers unicast (rather than multicast) delay-request messages and time transmitters unicast (rather than multicast) corresponding delay-response messages. An intervening transparent clock maintains a mapping table containing entries that map appropriate (PTP) port IDs to corresponding media access control (MAC) addresses that enable the transparent clock to forward the unicast delay-response messages towards the appropriate time receivers. As such, the volume of messages and the burden on transparent clocks to handle superfluous messages in such systems are reduced.

## Description

### Field

The present disclosure relates to computer networks and, more specifically but not exclusively, to ethernet-based computer networks that conform to a Precision Time Protocol (PTP) standard.

### Background

In a Precision Time Protocol (PTP) clock-distribution system conforming to the IEEE Std 1588-2008 (or its revised version of IEEE Std 1588-2019) standard, one or more PTP time transmitters (TTs) function as time references for one or more PTP time receivers (TRs), where each TT node maintains a PTP reference clock and each TR node maintains its own local clock that it disciplines to match the time at one of the TT nodes.

In a PTP clock-distribution system, TT nodes and TR nodes can exchange PTP messages (i.e., announce, sync, follow-up, delay-request, and delay-response messages) over links that may have one or more intermediate nodes, where some of the intermediate nodes may be routers that do not modify the PTP messages, while others of the intermediate nodes are able to modify at least some of the PTP messages. Such latter intermediate nodes are referred to as transparent clock (TC) nodes.

ATC node is capable of recording the arrival time and the departure time of a PTP message, calculating a local residence time based on the difference between the departure time and the arrival time, and adding its local residence time to the value stored in a correction field (called correctionField) in the header of the PTP message, such that, when the PTP message arrives at its destination (e.g., a TR node for a PTP sync message and a TT node for a PTP delay-request message), the value in the correctionField is the sum of the residence times for all of the TC nodes along the link over which the PTP message traversed. Note that, when a TC node modifies a PTP message in this way, the TC node changes the source media access control (MAC) address in the PTP message from the MAC address of the upstream node that created or last modified the PTP message to its own MAC address.

PTP TT, TR, and TC nodes can operate in one-step PTP modes or two-step PTP modes or both. Some nodes along a link may operate in one-step PTP modes, while other nodes along that same link may operate in two-step PTP modes. Note that, under the IEEE Std 1588-2019 standard, the configuration of one-step mode vs. two-step mode is per PTP port.

In a one-step PTP sync mode, a TT node transmits a PTP sync message containing the local transmit time (T1) of the PTP sync message. In a two-step PTP sync mode, the TT node transmits a PTP sync message without T1 and instead transmits a PTP follow-up message containing T1 for the previously transmitted PTP sync message.

In the one-step PTP sync mode, a TC node adds its local residence time to update the correctionField value in the PTP sync message and updates the source MAC (SMAC) address in the PTP sync message to be its own MAC address. In the two-step PTP sync mode, a TC node does not modify a PTP sync message, but instead adds the local residence time for the PTP sync message to the correctionField value and updates the SMAC address to be its own MAC address in the corresponding PTP follow-up message. In that case, the TR node will add the correctionField value in the received PTP sync message and the correctionField value in the corresponding received PTP follow-up message to calculate the sum of the residence times for all of the TC nodes along the link over which the PTP sync message traversed.

In a one-step PTP delay-request mode, the TR node transmits a PTP delay-request message to the TT node, and a TC node along that link adds its local residence time to the correctionField value and updates the SMAC address to be its own MAC address in the PTP delay-request message, such that the value in the correctionField of the PTP delay-request message received at the TT node will be the sum of the residence times for all of the TC nodes along the link over which the PTP delay-request message traversed. The TT node will then include that correctionField value in the corresponding PTP delay-response message transmitted to the TR node. In that case, the TC nodes will not modify the correctionField value and will not change the SMAC address in the PTP delay-response message.

In a two-step PTP delay-request mode, the TR node transmits a PTP delay-request message to the TT node, and a TC node along that link calculates and records its local residence time, but does not adjust the correctionField value or the SMAC address in the PTP delay-request message. Instead, when the corresponding PTP delay-response message arrives at each TC node, the TC node will add its stored local residence time for the corresponding PTP delay-request message to the value in the correctionField of the PTP delay-response message and updates the SMAC address, such that the value in the correctionField of the PTP delay-response message received at the TR node will be the sum of the residence times for all of the TC nodes along the link over which the previously transmitted PTP delay-request message traversed.

Note that TC nodes do not modify the SMAC addresses of any PTP announce messages.

In an ethernet-based PTP clock-distribution system, such as those conforming to the IEEE 802.3 and/or ITU-T G.8275.1 standards, TT nodes and TR nodes can multicast all PTP ethernet messages to ensure that the appropriate nodes receive the messages. Thus, in a system having multiple TT nodes and multiple TR nodes, each TT node will multicast its PTP ethernet announce, sync, follow-up, or delay-response messages to each TR node and each other TT node. Similarly, each TR node will multicast its PTP ethernet delay-request messages to each TT node and each other TR node. A TC node that receives a multicasted PTP ethernet message will forward that message towards the appropriate destination. As described above, when the TC node updates the value in the correctionField of a PTP message, the TC node will also update the SMAC address in the message to be its MAC address before forwarding the message. While this procedure ensures that the appropriate nodes will receive the PTP ethernet messages, it is also wasteful of network resources to transmit so many other PTP messages that are sent to inappropriate nodes, not to mention the burden on the TC node to do the correctionField updates for the PTP messages that will be dropped at inappropriate nodes.

### SUMMARY

The present disclosure provides nodes, such as TR nodes configured to unicast (instead of multicast) their PTP ethernet delay-request messages and TT nodes configured to unicast (instead of multicast) their corresponding PTP ethernet delay-response messages. Because an intervening TC node will modify the SMAC address in a PTP ethernet delay-request message for which the TC node updates the correctionField value, in order to be able to forward the corresponding PTP ethernet delay-response message towards the correct TR node, the intervening TC node maintains a mapping table of entries that map appropriate PTP port ID numbers to corresponding MAC addresses such that the TC node is able to appropriately modify the DMAC addresses in those PTP ethernet delay-response messages towards the correct TR node. As a result, the unicasting (instead of multicasting) of PTP ethernet delay-request and delay-response messages reduces both the flooding of PTP messages and the burden on TC nodes of updating PTP message correction Fields within an ethernet-based PTP time-distribution system having multiple TT nodes and/or multiple TR nodes.

A first aspect of the present disclosure provides a transparent clock (TC) node for a time-distribution system having multiple time transmitter (TT) nodes and/or multiple time receiver (TR) nodes and at least the TC node, the TC node comprising at least one processor, and at least one memory storing instructions that, upon being executed by the at least one processor, cause the TC node at least to handle delay-request and delay-response messages, wherein the TC node is configured to receive a unicast delay-request message transmitted by a TR node of the time-distribution system, update a mapping table based on the unicast delay-request message, modify the unicast delay-request message, forward the modified unicast delay-request message towards a TT node of the time-distribution system, receive a unicast delay-response message transmitted by the TT node, modify the unicast delay-response message based on information in the mapping table, and forward the modified unicast delay-response message towards the TR node.

In an implementation of the first aspect, the TC node can modify a source media access control (SMAC) address in the unicast delay-request message to be its media access control (MAC) address.

The TC node can modify a destination MAC (DMAC) address in the unicast delay-response message based on the information in the mapping table.

The information in the mapping table can map a port ID number for the unicast delay-request message to a MAC address of the unicast delay-request message.

The port ID can refer to sourcePortldentity in a common header of the unicast delay-request message.

The time-distribution system can comprise a Precision Time Protocol (PTP) system and the messages are PTP messages.

The PTP time-distribution system can comprise an ethernet-based system and the PTP messages can comprise ethernet messages.

A second aspect of the present disclosure provides a method for a TC node for a time-distribution system having multiple TT nodes and/or multiple TR nodes and at least the TC node, the method comprising the TC node handling delay-request and delay-response messages, wherein the TC node receives a unicast delay-request message transmitted by a TR node of the time-distribution system, updates a mapping table based on the unicast delay-request message, modifies the unicast delay-request message, forwards the modified unicast delay-request message towards a TT node of the time-distribution system, receives a unicast delay-response message transmitted by the TT node, modifies the unicast delay-response message based on information in the mapping table, and forwards the modified unicast delay-response message towards the TR node.

In an implementation of the second aspect, the TC node can modify an SMAC address in the unicast delay-request message to be its MAC address.

The TC node can modify a DMAC address in the unicast delay-response message based on the information in the mapping table.

The information in the mapping table can map a port ID number for the unicast delay-request message to a MAC address of the unicast delay-request message.

The port ID can refer to sourcePortldentity in a common header of the unicast delay-request message.

The time-distribution system can comprise a PTP system and the messages cam comprise PTP messages.

The PTP time-distribution system can comprise an ethernet-based system and the PTP messages can comprise ethernet messages.

A third aspect of the present disclosure provides a given node (hereinafter a first node) for a time-distribution system having multiple time transmitter (TT) nodes and/or multiple time receiver (TR) nodes and at least one intervening transparent clock (TC) node, the first node comprising at least one processor, and at least one memory storing instructions that, upon being executed by the at least one processor, cause the first node at least to handle delay-request and delay-response messages, wherein a TR node of the time-distribution system is configured to unicast a delay-request message towards a TT node of the time-distribution system, the TC node is configured to receive the unicast delay-request message, update a mapping table based on the unicast delay-request message, modify the unicast delay-request message, and forward the modified unicast delay-request message towards the TT node, the TT node is configured to receive the unicast delay-request message, and unicast a corresponding delay-response message towards the TC node, the TC node is configured to receive the unicast delay-response message, modify the unicast delay-response message based on information in the mapping table, and forward the modified unicast delay-response message towards the TR node, and the first node is one of the TT node, the TR node, and the TC node.

In an implementation of the third aspect, the first node can comprise the TR node.

In another implementation, the first node can comprise the TT node.

In another implementation, the first node can comprise the TC node.

The time-distribution system can comprise a Precision Time Protocol (PTP) system and the messages can comprise PTP messages.

The PTP time-distribution system can comprise an ethernet-based system and the PTP messages can comprise ethernet messages.

### BRIEF DESCRIPTION OF THE DRAWINGS

Embodiments of the disclosure will become more fully apparent from the following detailed description, the appended claims, and the accompanying drawings in which like reference numerals identify similar or identical elements.
FIG. 1 is a block diagram of a simple PTP clock-distribution system according to one embodiment of the present disclosure;
FIG. 2 is a flow diagram of the processing associated with a particular scenario for the system of FIG. 1; and
FIG. 3 is a simplified hardware block diagram of an example node 300 that can be used to implement any of the nodes of FIG. 1.

### DETAILED DESCRIPTION

Detailed illustrative embodiments of the present disclosure are disclosed herein. However, specific structural and functional details disclosed herein are merely representative for purposes of describing example embodiments of the present disclosure. The present disclosure may be embodied in many alternate forms and should not be construed as limited to only the embodiments set forth herein. Further, the terminology used herein is for the purpose of describing particular embodiments only and is not intended to be limiting of example embodiments of the disclosure.

As used herein, the singular forms "a," "an," and "the," are intended to include the plural forms as well, unless the context clearly indicates otherwise. It further will be understood that the terms "comprises," "comprising," "contains," "containing," "includes," and/or "including," specify the presence of stated features, steps, or components, but do not preclude the presence or addition of one or more other features, steps, or components. It also should be noted that in some alternative implementations, the functions/acts noted may occur out of the order noted in the figures. For example, two figures shown in succession may in fact be executed substantially concurrently or may sometimes be executed in the reverse order, depending upon the functions/acts involved.

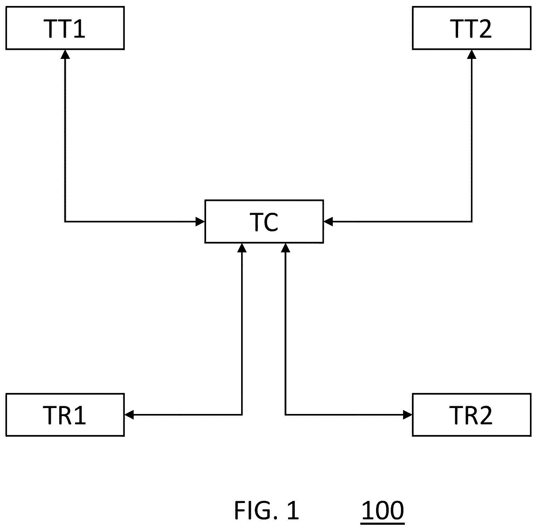

FIG. 1 is a block diagram of a simple, ethernet-based, PTP clock-distribution system 100 according to one embodiment of the present disclosure having two time transmitters TT1 and TT2 connected to two time receivers TR1 and TR2 by a single transparent clock TC. Those skilled in the art will understand that, in general, PTP clock-distribution systems of the present disclosure may have any suitable number of time transmitters connected to any suitable number of time receivers by any suitable number of transparent clocks, where (i) a given TT node may be connected to a given TR node by a sequence of one or more of the TC nodes and (ii) a given TC node may be connected either directly or indirectly to one or more of the TT nodes and one or more of the TR nodes.

According to certain embodiments of the disclosure, PTP ethernet announce, sync, and follow-up messages are multicast messages, while PTP ethernet delay-request and delay-response messages are unicast messages. Thus, for example, when TT1 of FIG. 1 transmits a PTP ethernet announce, sync, or follow-up message, TT1 will multicast three corresponding PTP ethernet messages towards TR1, TR2, and TT2 and TC will receive and forward those three multicast PTP messages towards TR1, TR2, and TT2. Likewise, when TT2 transmits a PTP ethernet announce, sync, or follow-up message, TT2 will multicast three corresponding PTP ethernet messages towards TR1, TR2, and TT1, and TC will receive and forward those three multicast PTP messages towards TR1, TR2, and TT1.

When TR1 transmits a PTP ethernet delay-request message intended for TT1, TR1 will unicast that PTP ethernet delay-request message towards TT1, and TC will forward that unicast PTP message towards TT1. Similarly, when TR1 transmits a PTP ethernet delay-request message intended for TT2, TR1 will unicast that PTP ethernet delay-request message towards TT2, and TC will forward that unicast PTP message towards TT2. Likewise, when TR2 transmits a PTP ethernet delay-request message intended for TT1, TR2 will unicast that PTP ethernet delay-request message towards TT1, and TC will forward that unicast PTP message towards TT1. Similarly, when TR2 transmits a PTP ethernet delay-request message intended for TT2, TR2 will unicast that PTP ethernet delay-request message towards TT2, and TC will forward that unicast PTP message towards TT2.

In addition, when TT1 transmits a PTP ethernet delay-response message intended for TR1, TT1 will unicast that PTP ethernet delay-response message towards TR1, and TC will forward that unicast PTP message towards TR1. Similarly, when TT1 transmits a PTP ethernet delay-response message intended for TR2, TT1 will unicast that PTP ethernet delay-response message towards TR2, and TC will forward that PTP message towards TR2. Likewise, when TT2 transmits a PTP ethernet delay-response message intended for TR1, TT2 will unicast that PTP ethernet delay-response message towards TR1, and TC will forward that unicast PTP message towards TR1. Similarly, when TT2 transmits a PTP ethernet delay-response message intended for TR2, TT2 will unicast that PTP ethernet delay-response message towards TR2, and TC will forward that unicast PTP message towards TR2.

To enable these unicast communications between intended TR nodes and TT nodes, TC maintains a mapping table that maps appropriate PTP port IDs to corresponding MAC addresses.

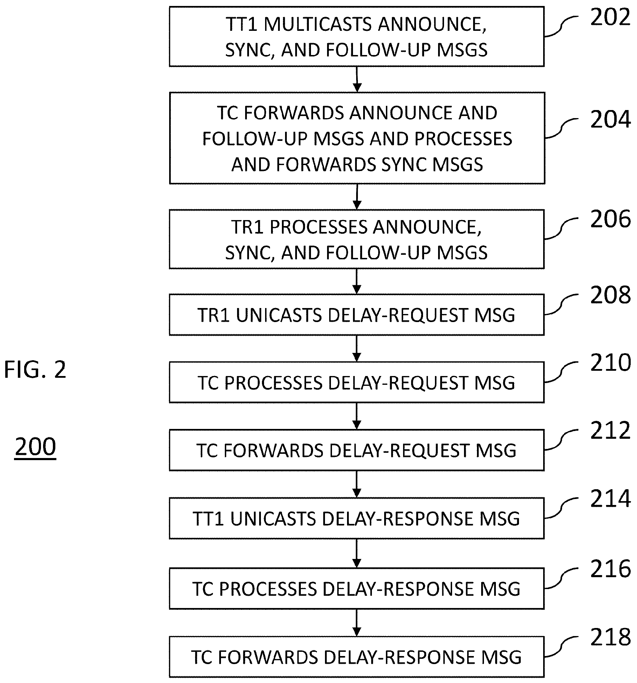

FIG. 2 is a flow diagram of the processing 200 associated with a particular scenario for the system 100 of FIG. 1. In step 202, TT1 multicasts towards TR1, TR2, and TT2 PTP ethernet announce, sync, and (in two-step PTP sync mode) follow-up messages, which are received at TC. In step 204, TC forwards the multicasted PTP ethernet announce messages and the multicasted PTP ethernet follow-up messages (if any). In addition, TC updates the correctionField and the SMAC address in the multicast PTP ethernet sync messages and then forwards the resulting, modified, multicast, PTP ethernet sync messages, which are received at TR1, TR2, and TT2. In step 206, TR1 selects TT1 to be its clock reference and extracts and saves the MAC address of TT1 from the SMAC address in the PTP ethernet announce message.

In response, in step 208, TR1 unicasts a PTP ethernet delay-request message intended for TT1 with its own MAC address as the message's SMAC address and the (saved) MAC address of TT1 as the message's destination MAC (DMAC) address, which message is received at TC. In step 210, TC updates its mapping table to add an entry that maps SMAC address and sourcePortldentity that are extracted from the received PTP ethernet delay-request message. In step 212, TC forwards the unicast PTP ethernet delay-request message towards TT1. Note that the TC transmits the unicast PTP delay-request message towards TT1 with its own MAC address as the message's SMAC address (i.e., not TR1's MAC address) and TT1's MAC address as the message's DMAC address.

In response to receiving that unicast PTP ethernet delay-request message, in step 214, TT1 unicasts a corresponding PTP ethernet delay-response message to TC with its own MAC address as the message's SMAC address and TC's MAC address as the message's DMAC address.

When that unicast PTP ethernet delay-response message arrives at TC, in step 216, TC performs a lookup at the mapping table to retrieve TR1's MAC address based on PTP port ID, where the PTP port ID is requestingPortldentity in the body of the unicast PTP ethernet delay-response message. As such, in step 218, TC then forwards the unicast PTP ethernet delay-response message with TT1's MAC address as the message's SMAC address and TR1's MAC address as the message's DMAC address.

The particular scenario depicted in FIG. 1 involves a single TC node that is (i) directly connected to multiple TT nodes and (i) directly connected to multiple TR nodes. In general, a TC node may be directly or indirectly connected to one or more TT nodes and directly or indirectly connected to one or more TR nodes. When a given TC node is indirectly connected to a TT node, one or more other TC nodes are located between the given TC node and the TT node. Similarly, when a given TC node is indirectly connected to a TR node, one or more other TC nodes are located between the given TC node and the TR node. In the case of a TC node that is indirectly connected to a TR node, the TC node's mapping table is with respect to the immediately upstream TC node that previously modified the PTP delay-request message. Thus, for example, in FIG. 1, if there is a second TC node between TC and TR1, the corresponding entry in TC's mapping table will be with respect to the second TC node, not with respect to TR1.

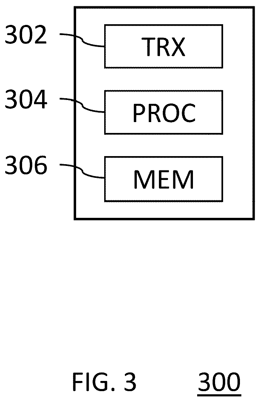

FIG. 3 is a simplified hardware block diagram of an example node 300 that can be used to implement any of the nodes of FIG. 1. As shown in FIG. 3, the node 300 includes (i) communication hardware (e.g., wireless, wireline, and/or optical transceivers (TRX)) 302 that supports communications with other nodes, (ii) one or more processors (e.g., CPU and/or GPU microprocessors) 304 that control the operations of the node 300 and/or process data within the node 300, and (iii) one or more memories (e.g., RAM, ROM) 306 that store code executed by the processors 304 and/or data generated and/or received by the node 300.

Although the disclosure has been described in the context of PTP time-distribution systems that conform to the IEEE Std 1588-2008 and IEEE Std 1588-2019 standards, those skilled in the art will understand that the present disclosure can be implemented in the context of other suitable time-distribution systems employing transparent clocks.

Unless explicitly stated otherwise, each numerical value and range should be interpreted as being approximate as if the word "about" or "approximately" preceded the value or range.

The use of figure numbers and/or figure reference labels in the claims is intended to identify one or more possible embodiments of the claimed subject matter in order to facilitate the interpretation of the claims. Such use is not to be construed as necessarily limiting the scope of those claims to the embodiments shown in the corresponding figures.

Although the elements in the following method claims, if any, are recited in a particular sequence with corresponding labeling, unless the claim recitations otherwise imply a particular sequence for implementing some or all of those elements, those elements are not necessarily intended to be limited to being implemented in that particular sequence. Likewise, additional steps may be included in such methods, and certain steps may be omitted or combined, in methods consistent with various embodiments of the disclosure.

Reference herein to "one embodiment" or "an embodiment" means that a particular feature, structure, or characteristic described in connection with the embodiment can be included in at least one embodiment of the disclosure. The appearances of the phrase "in one embodiment" in various places in the specification are not necessarily all referring to the same embodiment, nor are separate or alternative embodiments necessarily mutually exclusive of other embodiments. The same applies to the term "implementation."

Unless otherwise specified herein, the use of the ordinal adjectives "first," "second," "third," etc., to refer to an object of a plurality of like objects merely indicates that different instances of such like objects are being referred to, and is not intended to imply that the like objects so referred-to have to be in a corresponding order or sequence, either temporally, spatially, in ranking, or in any other manner.

Also, for purposes of this description, the terms "couple," "coupling," "coupled," "connect," "connecting," or "connected" refer to any manner known in the art or later developed in which energy is allowed to be transferred between two or more elements, and the interposition of one or more additional elements is contemplated, although not required. Conversely, the terms "directly coupled," "directly connected," etc., imply the absence of such additional elements. The same type of distinction applies to the use of terms "attached" and "directly attached," as applied to a description of a physical structure.

As used herein in reference to an element and a standard, the terms "compatible" and "conform" mean that the element communicates with other elements in a manner wholly or partially specified by the standard and would be recognized by other elements as sufficiently capable of communicating with the other elements in the manner specified by the standard. A compatible or conforming element does not need to operate internally in a manner specified by the standard.

The described embodiments are to be considered in all respects as only illustrative and not restrictive. In particular, the scope of the disclosure is indicated by the appended claims rather than by the description and figures herein. All changes that come within the meaning and range of equivalency of the claims are to be embraced within their scope.

The functions of the various elements shown in the figures, including any functional blocks labeled as "processors" and/or "controllers," may be provided through the use of dedicated hardware as well as hardware capable of executing software in association with appropriate software. Upon being provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those of ordinary skill in the art that any block diagrams herein represent conceptual views of illustrative circuitry embodying the principles of the disclosure. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

As will be appreciated by one of ordinary skill in the art, the present disclosure may be embodied as an apparatus (including, for example, a system, a network, a machine, a device, a computer program product, and/or the like), as a method (including, for example, a business process, a computer-implemented process, and/or the like), or as any combination of the foregoing. Accordingly, embodiments of the present disclosure may take the form of an entirely software-based embodiment (including firmware, resident software, micro-code, and the like), an entirely hardware embodiment, or an embodiment combining software and hardware aspects that may generally be referred to herein as a "system" or "network".

Embodiments of the disclosure can be manifest in the form of methods and apparatuses for practicing those methods. Embodiments of the disclosure can also be manifest in the form of program code embodied in tangible media, such as magnetic recording media, optical recording media, solid state memory, floppy diskettes, CD-ROMs, hard drives, or any other non-transitory machine-readable storage medium, wherein, upon the program code being loaded into and executed by a machine, such as a computer, the machine becomes an apparatus for practicing the disclosure. Embodiments of the disclosure can also be manifest in the form of program code, for example, stored in a non-transitory machine-readable storage medium including being loaded into and/or executed by a machine, wherein, upon the program code being loaded into and executed by a machine, such as a computer, the machine becomes an apparatus for practicing the disclosure. Upon being implemented on a general-purpose processor, the program code segments combine with the processor to provide a unique device that operates analogously to specific logic circuits. The term "non-transitory," as used herein, is a limitation of the medium itself (i.e., tangible, not a signal) as opposed to a limitation on data storage persistency (e.g., RAM vs. ROM).

Signals and corresponding terminals, nodes, ports, links, interfaces, or paths may be referred to by the same name and/or label and are interchangeable for purposes here.

In this specification including any claims, the term "each" may be used to refer to one or more specified characteristics of a plurality of previously recited elements or steps. When used with the open-ended term "comprising," the recitation of the term "each" does not exclude additional, unrecited elements or steps. Thus, it will be understood that an apparatus may have additional, unrecited elements and a method may have additional, unrecited steps, where the additional, unrecited elements or steps do not have the one or more specified characteristics.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements. For example, the phrases "at least one of A and B" and "at least one of A or B" are both to be interpreted to have the same meaning, encompassing the following three possibilities: 1- only A; 2- only B; 3- both A and B.

All documents mentioned herein are hereby incorporated by reference in their entirety or alternatively to provide the disclosure for which they were specifically relied upon.

The embodiments covered by the claims in this application are limited to embodiments that (1) are enabled by this specification and (2) correspond to statutory subject matter. Non-enabled embodiments and embodiments that correspond to non-statutory subject matter are explicitly disclaimed even if they fall within the scope of the claims.

As used herein and in the claims, the term "provide" with respect to an apparatus or with respect to a system, device, or component encompasses designing or fabricating the apparatus, system, device, or component; causing the apparatus, system, device, or component to be designed or fabricated; and/or obtaining the apparatus, system, device, or component by purchase, lease, rental, or other contractual arrangement.

While preferred embodiments of the disclosure have been shown and described herein, it will be obvious to those skilled in the art that such embodiments are provided by way of example only. Numerous variations, changes, and substitutions will now occur to those skilled in the art without departing from the disclosure. It should be understood that various alternatives to the embodiments of the disclosure described herein may be employed in practicing the technology of the disclosure. It is intended that the following claims define the scope of the present disclosure and that methods and structures within the scope of these claims and their equivalents be covered thereby.

## Claims

1. A transparent clock, TC, node for a time-distribution system having multiple time transmitter, TT, nodes and/or multiple time receiver, TR, nodes and at least the TC node, the TC node comprising means to:
receive a unicast delay-request message transmitted by a TR node of the time-distribution system;
update a mapping table based on the unicast delay-request message;
modify the unicast delay-request message;
forward the modified unicast delay-request message towards a TT node of the time-distribution system;
receive a unicast delay-response message transmitted by the TT node;
modify the unicast delay-response message based on information in the mapping table; and
forward the modified unicast delay-response message towards the TR node.

2. The TC node of claim 1, wherein the TC node is configured to modify a source media access control, SMAC, address in the unicast delay-request message to be its media access control, MAC, address.

3. The TC node of claim 1 or 2, wherein the TC node is configured to modify a destination MAC, DMAC, address in the unicast delay-response message based on the information in the mapping table.

4. The TC node of claim 1, 2 or 3, wherein the information in the mapping table maps a port ID number for the unicast delay-request message to a MAC address of the unicast delay-request message.

5. The TC node of claim 4, wherein the port ID refers to sourcePortldentity in a common header of the unicast delay-request message.

6. The TC node of claim 1, wherein the time-distribution system is a Precision Time Protocol, PTP, system and the messages are PTP messages.

7. The TC node of claim 6, wherein the PTP time-distribution system is an ethernet-based system and the PTP messages are ethernet messages.

8. A method for a TC node for a time-distribution system having multiple TT nodes and/or multiple TR nodes and at least the TC node, the method comprising the TC node handling delay-request and delay-response messages, wherein the TC node:
receives a unicast delay-request message transmitted by a TR node of the time-distribution system;
updates a mapping table based on the unicast delay-request message;
modifies the unicast delay-request message;
forwards the modified unicast delay-request message towards a TT node of the time-distribution system;
receives a unicast delay-response message transmitted by the TT node;
modifies the unicast delay-response message based on information in the mapping table; and
forwards the modified unicast delay-response message towards the TR node.

9. The method of claim 8, wherein the TC node modifies an SMAC address in the unicast delay-request message to be its MAC address.

10. The method of claim 8 or 9, wherein the TC node modifies a DMAC address in the unicast delay-response message based on the information in the mapping table.

11. The method of claim 8, 9 or10, wherein the information in the mapping table maps a port ID number for the unicast delay-request message to a MAC address of the unicast delay-request message.

12. The method of claim 11, wherein the port ID refers to sourcePortldentity in a common header of the unicast delay-request message.

13. The method of claim 8, wherein the time-distribution system is a PTP system and the messages are PTP messages.

14. The method of claim 13, wherein the PTP time-distribution system is an ethernet-based system and the PTP messages are ethernet messages.

15. A first node for a time-distribution system having multiple time transmitter, TT, nodes and/or multiple time receiver, TR, nodes and at least one intervening transparent clock, TC, node, the first node comprising:
at least one processor; and
at least one memory storing instructions that, upon being executed by the at least one processor, cause the first node at least to handle delay-request and delay-response messages, wherein:
a TR node of the time-distribution system is configured to unicast a delay-request message towards a TT node of the time-distribution system;
the TC node is configured to:
receive the unicast delay-request message;
update a mapping table based on the unicast delay-request message;
modify the unicast delay-request message; and
forward the modified unicast delay-request message towards the TT node;
the TT node is configured to:
receive the unicast delay-request message; and
unicast a corresponding delay-response message towards the TC node;
the TC node is configured to:
receive the unicast delay-response message;
modify the unicast delay-response message based on information in the mapping table; and
forward the modified unicast delay-response message towards the TR node; and
the first node is one of the TT node, the TR node, and the TC node.
